# EUROPEAN PATENT SPECIFICATION

(11) **EP 2 680 708 B1**
(45) Date of publication and mention of the grant of the patent: **06.01.2016**
(21) Application number: 12706285.9
(22) Date of filing: 02.03.2012
(51) Int. Cl.: A23G 9/04, A23G 9/22, B67D 1/00

(54) **APPARATUS FOR PREPARING REFRIGERATED PRODUCTS**
VORRICHTUNG ZUR HERSTELLUNG VON GEKÜHLTEN PRODUKTEN
APPAREIL DE PRÉPARATION DE PRODUITS RÉFRIGÉRÉS

(30) Priority: 04.03.2011 IT BO20110107
(43) Date of publication of application: 08.01.2014
(73) Proprietor: S.P.M. Drink Systems S.P.A., 41057 Spilamberto (MO) (IT)
(72) Inventor: GRAMPASSI, Enrico, I-41057 Spilamberto (MO) (IT)
(74) Representative: Manzella & Associati
(86) International application number: PCT/EP2012/053678
(87) International publication number: WO 2012/119962

(56) References cited:
- JP-A- 10 286 066
- JP-A- 11 253 105
- US-A1- 2009 139 257

## Description

### Technical Field

The present invention regards an apparatus for preparing and dispensing refrigerated products, such as for example crushed-ice drinks, ice creams, sorbets and the like.

### Background Art

Nowadays are known counter apparatuses which allow to prepare and dispense at the moment refrigerated products of the type of traditional water based crushed-ice drinks or alternatively cream products such as ice creams, sorbets, coffee creams and the like.

Such known apparatuses are generally constituted by a tank suitable to contain the product to be prepared and dispensed, wherein are arranged a cooling device for cooling the product to the appropriated temperature and a mixing device which causes the continuous circulation of the product inside the tank. The circulation device, for example consisting in a screw member taken in rotation according to an axis longitudinal to the tank, is suitable to convey the cooled product towards a front zone, where a dispenser device for the product is placed. The dispenser device is provided with an obturator element which can be actuated by means of an external lever member.

A drawback complained by the users in the use of the cited apparatuses consists in the thermal dispersion occurring between the inside of the tank, maintained at a low temperature by the cited device for cooling the product, and the external environment. Practically, part of the refrigerating power of the apparatus is dispersed in the environment so, in order to maintain the product at the required temperature, the cooling device must be constantly maintained in function to make up for the cited thermal dispersion. This obviously causes an elevated energetic consumption and as a consequence a bigger cost of the product.

The difference of temperature between the inside of the tank and the external environment further causes the formation of condensate and in some cases of a layer of ice on the wall of the tank, often made of transparent material. Further to producing an unpleasant esthetical aspect, this renders the vision of the product inside the tank difficult.

Then it has to be observed that, always on account of the cited heat dispersion, the known apparatuses are not able to function correctly when the external temperature is very high, as the cooling device does not have the power necessary to reduce the temperature inside the tank to the value required for preparing refrigerated products.

### Disclosure

The task of the present invention is that of solving the aforementioned problems, devising an apparatus for preparing and dispensing refrigerated products which allows to efficiently limit the thermal dispersions.

Within such task, it is a further scope of the present invention that of providing an apparatus which enables the preparation of refrigerated products also with high external temperatures.

Another object of the invention is that of providing an apparatus for preparing refrigerated products having a simple conception, a securely reliable functioning and versatile use, as well as relatively economic cost.

The cited scopes are attained, according to the present invention, by the apparatus for preparing refrigerating products according to claim 1.

According to the present invention, the apparatus for preparing refrigerated products comprises a containment tank for the product in preparation insulated by means of thermally insulating walls in a way as to reduce the thermal exchange between the external environment and the inside of the same tank.

Preferably said thermally insulating walls comprise a first internal wall and a second external wall between which a closed interspace is hermetically defined.

As a preference in said interspace is contained a low thermal conductivity gas.

### Description of Drawings

Details of the invention shall be more apparent from the detailed description of a preferred embodiment of the apparatus for preparing refrigerated products, illustrated for indicative purposes in the attached drawings, wherein:

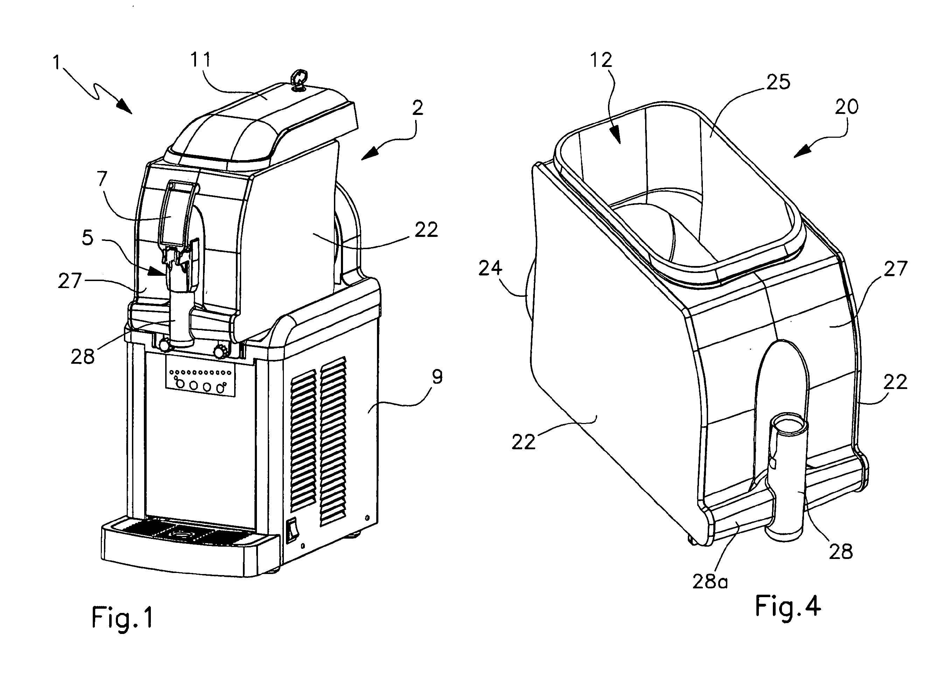

figure 1 shows a perspective view of the apparatus for preparing refrigerated products in hand;
figure 2 shows a corresponding perspective view thereof from a different angle;
figure 2A shows an increased view of the detail A in fig. 2;
figure 3 shows a view of the apparatus in section according to a median longitudinal plane;
figure 4 shows a perspective view of a tank for containing the product in the apparatus;
figure 5 shows a section view according to a median longitudinal plane of such a tank for containing the product;
figures 6 and 7 show corresponding section views thereof according to a transverse plane and according to a horizontal plane;
figure 8 shows a perspective view, with removed parts, of a different embodiment of the containment tank for the product;
figures 9 and 10 show corresponding views thereof according to a longitudinal plane and according to a transverse plane;
figures 11 and 12 show further views thereof in section according to different horizontal planes.

### Best Mode

With particular reference to such figures, the apparatus for preparing and dispensing refrigerated products, such as for example crushed-ice drinks, ice creams, sorbets and the like, is indicated in its entirety with 1.

The apparatus 1 provides a containment tank 2 for the product to be dispensed, preferably made of transparent plastic material. Inside the containment tank 2 is arranged, in a known manner, a mixing device 3 consisting in a screw member driven in rotation according to an axis longitudinal to the tank 2 in order to cause the continuous circulation of the product inside the same tank 2. Inside the tank 2 is further arranged a cooling device 4 for cooling the product to the suitable temperature. A temperature sensor, preferably arranged inside the tank 2 in proximity of the front wall, is suitable to control the temperature of the product at the dispensing zone.

The containment tank 2 has frontally a dispenser device 5 provided with an obturator member 6 which can be actuated by means of an external lever member 7. The obturator member 6 is sliding inside a cylindrical seat realized, with a substantially vertical axis, by a sleeve 28 shaped by the tank 2.

The containment tank 2 is mounted above a base body 9 having a substantially prismatic shape. The base body 9 is suitable to contain in its own inside the actuation members of the apparatus, known per se and not described in more detail.

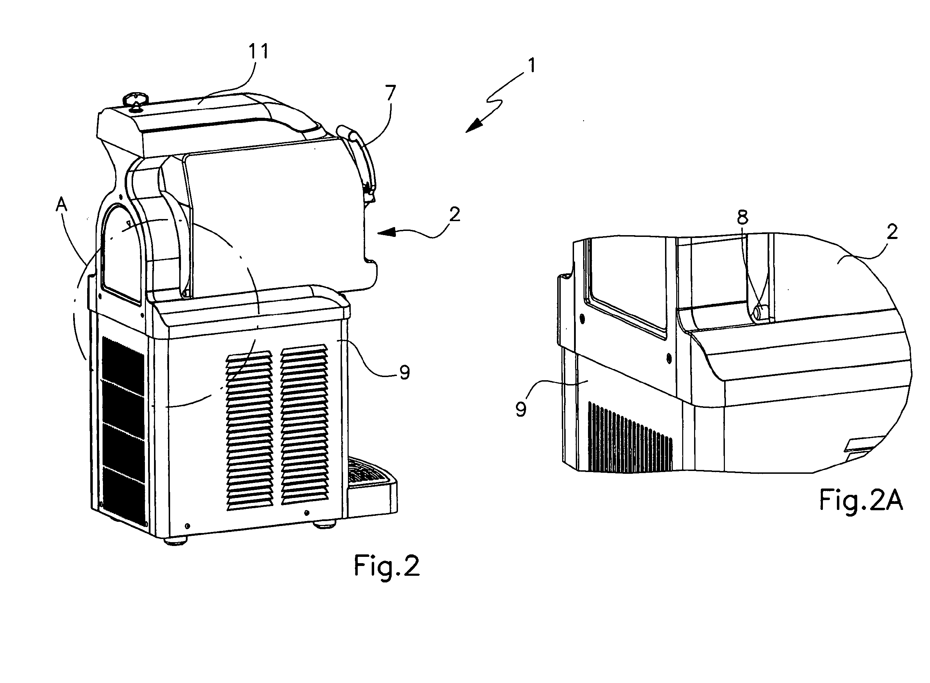

According to the present invention, the containment tank 2 is insulated by means of thermally insulating walls in a way as to reduce the thermal exchange between the external environment and the inside of the same tank 2. Such thermally insulating walls comprise a first internal wall 21 and a second external wall 22 between which a hermetically closed interspace 23 is defined. Preferably in said interspace 23 is contained a low thermal conductivity gas, which for simplicity can be constituted by air. The gas is introduced inside the interspace 23 by means of a valve member 8 arranged preferably in the rear part of the tank 2 (fig. 2A).

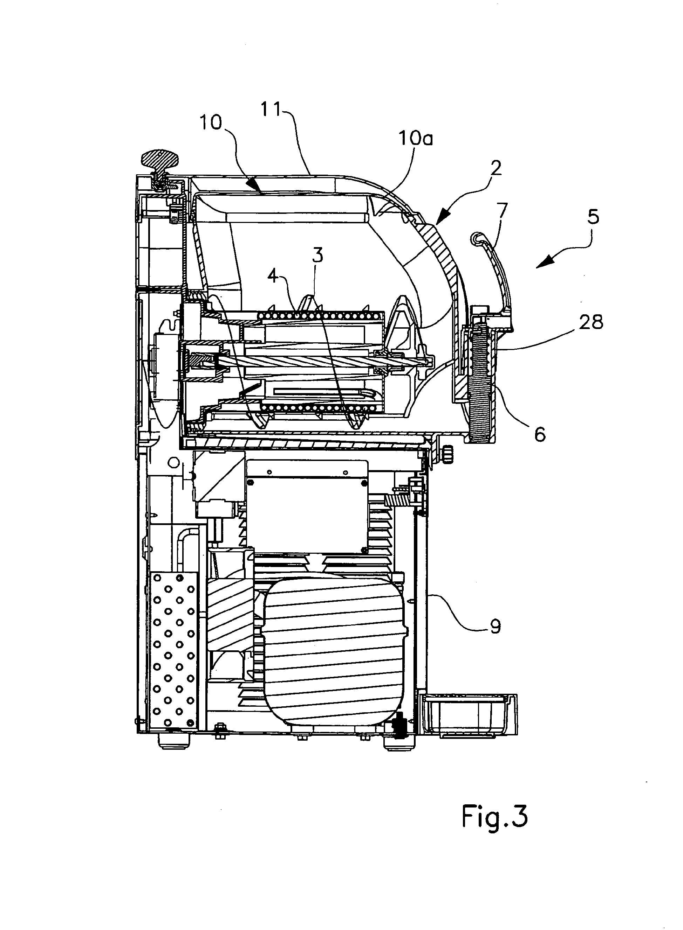

More precisely, the tank 2 consists in a tank body 20 preferably made in a single piece through moulding of transparent plastic material, contained between a couple of lateral walls 22; obviously it is possible to provide that the tank body 20 is realized in a different way, for example through suitable mechanical working. The tank body 20 has a lower portion 24 having the shape of a cylindrical sector extending along a substantially horizontal axis and an upper portion 25 which extends from the aforesaid cylindrical portion 24. The upper portion 25 of the tank body 20 is provided with an upper opening 12 suitable to be closed by a lid 10 (fig. 3). To the lid 10 is suitably superimposed a profiled carter 11 which defines an interspace with respect to the same lid 10. Alternatively it is possible to provide that the lid 10 and the carter 11 are made integral in a way as to render the aforesaid interspace hermetic.

The cylindrical portion 24 extends above a base plate 26, having a substantially rectangular shape, shaped by the same tank body 20. In mounting position such a base plate 26 results suitably distanced from the upper surface of the base body 9 of the apparatus (see again fig. 3).

The tank body 20 has frontally a front closure wall 27 shaping the cited sleeve 28 of the dispenser device 5. More precisely, the sleeve 28 intersects a profiled portion 28a protruding from the lower part of the front wall 27.

Suitably the front wall 27 has, at the upper portion 25 of the tank body 20, a curved portion 27a inclined towards the inside of the tank to direct towards such an end the product which has interacted with the mixing device 3, in a way as to avoid stagnations of the product in the upper angles of the same tank. On its turn the lid 10 is provided, above said inclined wall 27a, with a curved portion 10a which constitutes a prolongation of the same inclined portion of the wall 27 of the tank, to allow the product to gradually change direction.

The front wall 27 extends in front of a further wall 29 shaped by the tank body 20, suitably spaced therefrom, specifically suitable to close frontally the cylindrical portion 24, as specified in the following.

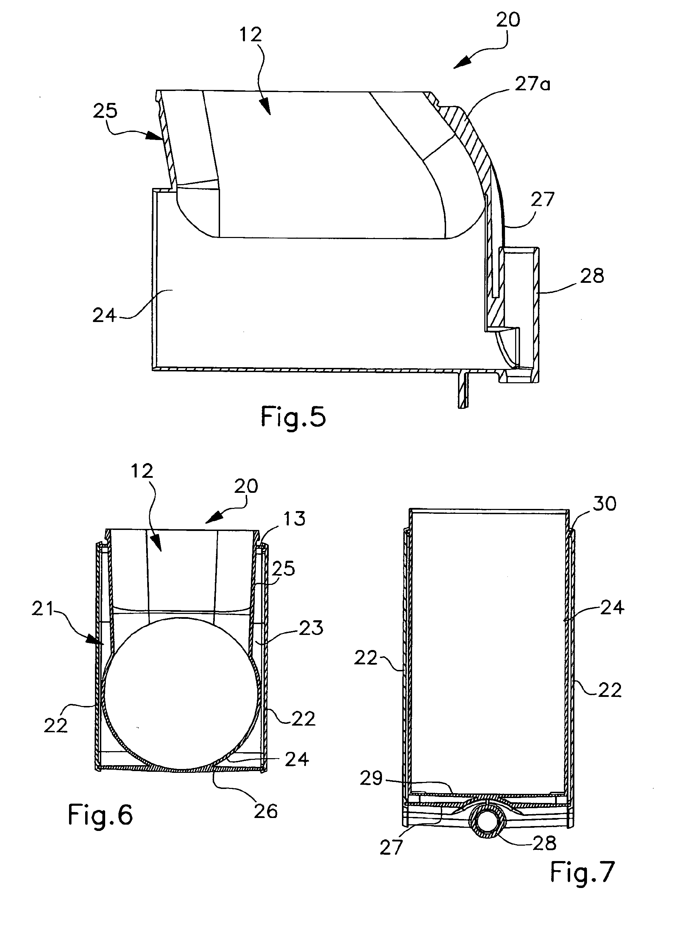

The tank body 20 is arranged between a couple of lateral walls 22 which are equally obtained through moulding of transparent plastic material. The lateral walls 22 are made hermetically integral, along the upper longitudinal edge, to a rim 13 which surrounds the upper opening 12 of the tank body 20 and, along the lower longitudinal edge, to the base plate 26 of the same tank body 20, in a way as to contain the cited interspace 23 (see fig. 6). The lateral walls 22 are also made hermetically integral, along the front and rear vertical edges, to the front wall 27 of the tank body 20 and to corresponding edges of a rear wall 30 of the same tank body 20 (see fig. 7).

It is to be observed that the cited further wall 29 integral at the front side to the tank body 20 defines on its turn with respect to the front wall 27 an interspace in communication with the interspace defined between the same tank body 20 and the lateral walls 22.

The functioning of the apparatus for preparing and dispensing refrigerated products, such as crushed-ice drinks, ice creams, sorbets and the like, turns out to be easy to understand from the preceding description.

After introducing the product in the tank 2, through the upper opening 12, the preparation cycle is activated. In particular the cooling device 4 is automatically activated, setting the suitable working temperatures, and the screw member of the mixing device 3 is actuated in rotation at a predetermined rate. The suitable temperature sensor, arranged inside the tank 2 preferably in proximity of the front wall, periodically controls the temperature of the product. When required, dispensing of the product is performed by actuating the obturator member 6 of the dispenser device 5 in opening position through the lever member 7.

The insulated walls of the containment tank for the product allow to limit the thermal dispersion between the inside of the tank, maintained at a low temperature by the device for cooling the product in preparation, and the external environment.

In particular the cylindrical portion 24 and the upper portion 25 of the tank body 20 constitute the internal wall 21 of the tank 2 for containing the product. Such an internal wall 21 is integrally insulated by means of the interspace 23 defined by the lateral walls 22 which hermetically close themselves on the tank body 20.

The apparatus in hand therefore attains the scope of performing in an optimal manner the preparation and dispense of refrigerated products, such as crushed-ice drinks, ice creams, sorbets and the like, avoiding that a considerable part of the product refrigerating power of the apparatus to be dispersed in the environment. This causes minor consumptions and so an evident energetic saving and minor operating costs of the apparatus, further to an improvement of its general performances, to the advantage of the ecologic character of the apparatus.

This allows in particular to not frequently activate the cooling members for the product, once the maintenance step is reached.

A characteristic of the apparatus in hand is that of allowing the preparation of refrigerated products also with elevated external temperatures.

Another advantage offered by the apparatus in hand is to avoid the formation of condensate or ice on the walls of the tank, made in transparent material, ensuring a pleasant esthetical aspect and making the vision of the product inside the tank always possible. The absence of condensate further makes the application of luminous or adhesive material made elements on the walls of the tank possible, as an example for promotional purposes.

It is to be observed that the easy regulation of the parameters which influence the preparation of the product enable to control in the most appropriated manner the characteristics of the dispensed product, for example when the external temperature varies. The constant quality of the dispensed product is therefore warranted.

Another characteristic of the apparatus in hand is that of allowing to dispense a wide variety of products.

The apparatus described for indicative purpose is susceptible of numerous modifications and variants according to the diverse exigencies.

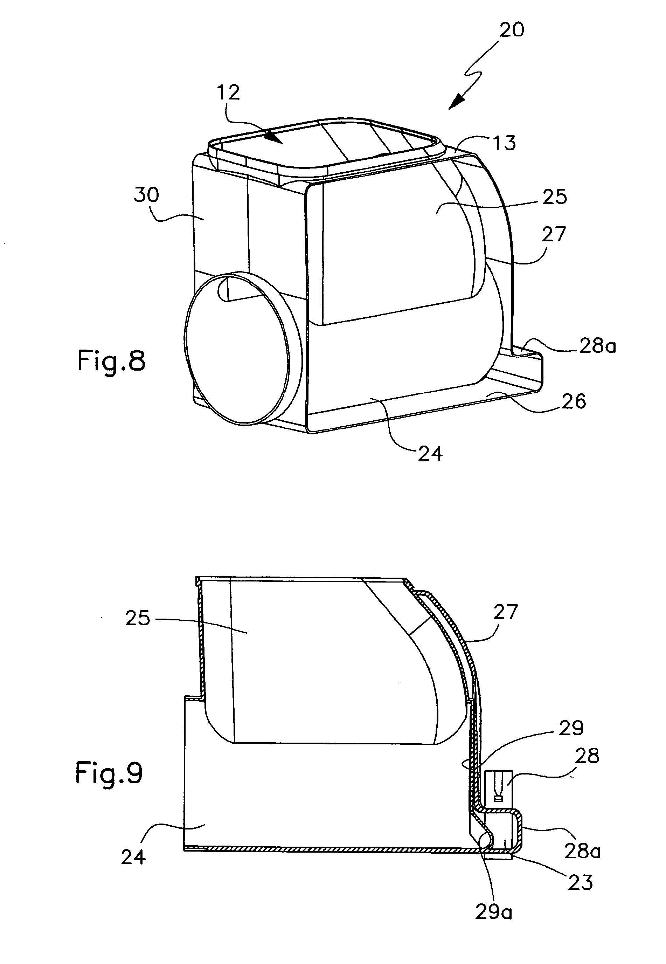

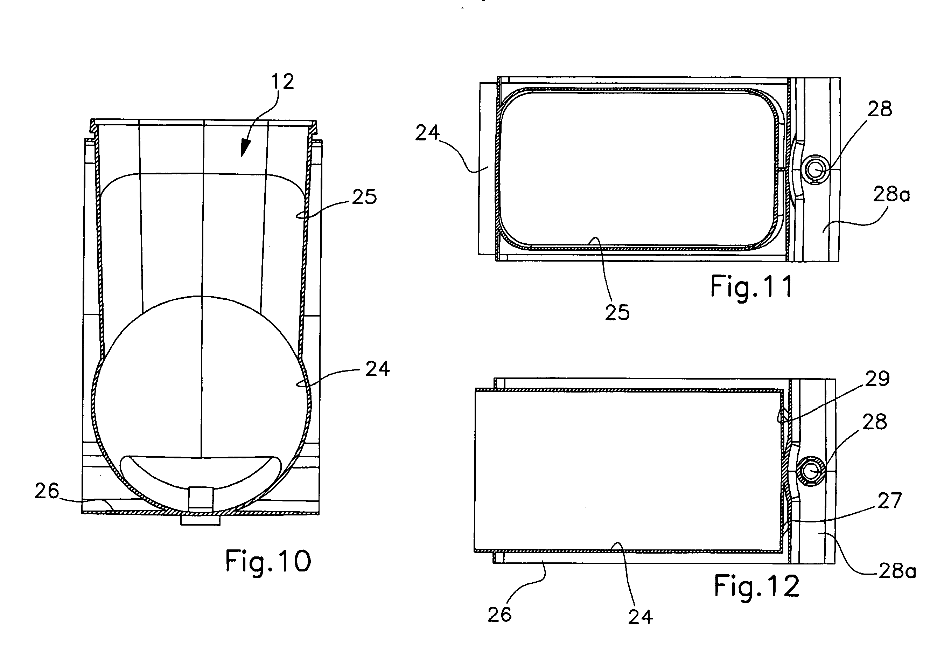

In figures 8 - 12 is illustrated a different embodiment of the containment tank 2 which allows to insulate also the part of the dispenser device 5 interested, during use, by the presence of the product to be dispensed. In particular in the cited figures 8 - 12 the tank body 20 lacking the lateral walls 22 is illustrated, to better point out the conformation thereof. Such an insulation is obtained by means of an increase of the dimensions of the profiled portion 28a intersected by the sleeve 8 of the dispenser device 5. Practically the profiled portion 28a results protruding from the lower part of the front wall 27 of the tank for a tract sufficient to incorporate the lower tract of the sleeve 8 which is in communication with the inside of the cylindrical portion of the tank 2. The profiled portion 28a defines with respect to a corresponding tract 29a of the internal wall 29 an insulation interspace, indicated again with 23 for clarity.

It is to be observed that the base plate 26, the front wall 27 and the profiled portion 28a of the tank body 20 realize in substance a continuous profile on which the lateral walls 22 are welded, on opposite sides, in a way as to define the cited hermetically closed interspace 23 (see in particular fig. 8). Such a continuous profile also comprises the rear wall 30, wherein the mouth of the cylindrical portion 24 is opened, and the upper rim 13 of the opening 12 for introducing the product. In practice the cited interspace 23 surrounds on all the sides the cylindrical portion 24 and the upper portion 25 of the tank body 20 constituting the internal wall 21 of the tank.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Apparatus for preparing refrigerated products, comprising a containment tank (2) suitable to contain the product to be prepared; a mixing device (3) arranged inside said tank (2) and suitable to cause the continuous circulation of the product inside the same tank (2), in order to convey the product towards a front zone of said tank (2); a cooling device (4) arranged inside said tank (2) to cool said product; a dispenser device (5) for the product, positioned at said front zone of the containment tank (2), said containment tank (2) being insulated by means of thermally insulating walls (21, 22) so as to reduce the thermal exchange between the external environment and the inside of the same tank (2), **characterized in that** said thermally insulating walls comprise a tank body (20) arranged between a couple of lateral walls (22) made hermetically integral to the same tank body (20) to realize an interspace (23), said tank body (20) being closed, at the front side, by a wall (27) which extends in front of a further wall (29), shaped in a single piece with the same front wall (27) and suitably distanced to define a relevant interspace with respect to the same front wall (27), said further wall (29) being suitable to frontally close in a hermetic manner a first internal wall (21) of said thermally insulating walls (21, 22) of the tank (2), said front wall (27) having at a lower part a profiled portion (28a) protruding for a tract sufficient to incorporate a sleeve (28) of said dispenser device (5) which is in communication with the inside of said tank (2), said profiled portion (28a) being suitable to define an insulation interspace for said sleeve (28).

2. Apparatus according to claim 1, **characterized in that** said thermally insulating walls comprise said first internal wall (21) and a second external wall (22) between which is defined an interspace (23) hermetically closed.

3. Apparatus according to claim 2, **characterized in that** said interspace (23) contains a low thermal conductivity gas.

4. Apparatus according to claim 1, **characterized in that** said tank body (20) has a lower portion (24) having the shape of a cylindrical sector extending along a substantially horizontal axis and an upper portion (25) which extends from the aforesaid cylindrical portion (24) and is provided with an upper opening (12) suitable to be closed by a lid (10), said lower portion (24) and said upper portion (25) constituting said first internal wall (21) of the tank (2).

5. Apparatus according to claim 1, **characterized in that** said front wall (27) has, at the upper portion (25) of said tank body (20), a curved portion (27a) inclined towards the inside of the tank to direct towards such extremity the product that has interacted with said mixing device (3), so as to avoid stagnations of the product in the upper angles of the tank (2).

6. Apparatus according to claim 1, **characterized in that** said tank body (20) extends over a base plate (26), having a substantially rectangular shape, shaped by the same tank body (20) and suitable to be made hermetically integral, along the longitudinal edges, to said lateral walls (22).

7. Apparatus according to one the previous claims, **characterized in that** said containment tank (2) is made of a transparent plastic material.

## Patentansprüche

1. Gerät für die Herstellung von gekühlten Erzeugnissen, umfassend eine Aufnahmewanne (2), die geeignet ist, das herzustellende Erzeugnis aufzunehmen; eine Mischvorrichtung (3), die im Inneren der Wanne (2) angeordnet und dazu geeignet ist, für die ständige Zirkulation des Erzeugnisses im Inneren der Wanne (2) zu sorgen, um das Erzeugnis zu einem vorderen Bereich der Wanne (2) hin zu fördern; eine Kühlvorrichtung (4), die im Inneren der Wanne (2) angeordnet ist, um das Erzeugnis zu kühlen; einen Spender (5) für das Erzeugnis, der in dem vorderen Bereich der Aufnahmewanne (2) angeordnet ist, wobei die Aufnahmewanne (2) mittels wärmedämmenden Wänden (21, 22) derart isoliert ist, dass der Wärmeaustausch zwischen dem Außenraum und dem Innenraum der Wanne (2) reduziert wird, **dadurch gekennzeichnet, dass** die wärmedämmenden Wände einen Wannenkörper (20) umfassen, der zwischen einem Paar von Seitenwänden (22) angeordnet ist, die hermetisch fest mit dem Wannenkörper (20) verbunden sind, um einen Zwischenraum (23) zu bilden, wobei der Wannenkörper (20) auf der vorderen Seite durch eine Wand (27) verschlossen wird, die sich gegenüber einer weiteren Wand (29) erstreckt, die einstückig mit der vorderen Wand (27) ausgestaltet und entsprechend beabstandet ist, um ihr gegenüber einen jeweiligen Zwischenraum zu bilden, wobei die weitere Wand (29) geeignet ist, eine erste Wand (21) innerhalb der wärmedämmenden Wände (21, 22) der Wanne (2) vorderseitig hermetisch zu verschließen, wobei die vordere Wand (27) unterseitig einen schablonierten Anteil (28a) aufweist, der um einen Abschnitt auskragt, der ausreicht, um eine Muffe (28) des Spenders (5) aufzunehmen, der mit dem Inneren der Wanne (2) in Verbindung steht, wobei der schablonierte Anteil (28a) geeignet ist, einen isolierenden Zwischenraum der Muffe (28) zu definieren.

2. Gerät nach Anspruch 1, **dadurch gekennzeichnet, dass** die wärmedämmenden Wände eine erste, innere Wand (21) und eine zweite, äußere Wand (22) umfassen, zwischen denen ein hermetisch geschlossener Zwischenraum (23) definiert ist.

3. Gerät nach Anspruch 2, **dadurch gekennzeichnet, dass** in dem Zwischenraum (23) ein Gas mit geringer Wärmeleitfähigkeit enthalten ist.

4. Gerät nach Anspruch 1, **dadurch gekennzeichnet, dass** der Wannenkörper (20) einen unteren Anteil (24) in Form eines zylindrischen Segments aufweist, das sich längs einer im Wesentlichen horizontalen Achse erstreckt, und einen oberen Anteil (25), der sich aus dem zylindrischen Anteil (24) heraus erstreckt und mit einer oberen Öffnung (12) versehen ist, die dazu geeignet ist, mit einem Deckel (10) verschlossen zu werden, wobei der obere Anteil (25) die erste innere Wand (21) der Wanne (2) bildet.

5. Gerät nach Anspruch 1, **dadurch gekennzeichnet, dass** die vordere Wand (27) am oberen Anteil (25) des Wannenkörpers (20) einen gebogenen Anteil (27a) aufweist, der zum Inneren der Wanne hin gebogen ist, um das Erzeugnis, das mit der Mischvorrichtung (3) in Wechselwirkung getreten ist, zu diesem Ende hin zu leiten, damit ein Rückstau des Erzeugnisses in den oberen Ecken der Wanne (2) vermieden wird.

6. Gerät nach Anspruch 1, **dadurch gekennzeichnet, dass** der Wannenkörper (20) sich oberhalb einer im Wesentlichen rechteckig geformten Basisplatte (26) erstreckt, die aus dem Wannenkörper (20) ausgestaltet und dazu geeignet ist, längs der Längskanten hermetisch fest mit den Seitenwänden (22) verbunden zu werden.

7. Gerät nach einem der vorstehenden Ansprüche, **dadurch gekennzeichnet, dass** die Aufnahmewanne (2) aus einem lichtdurchlässigen Kunststoffmaterial hergestellt ist.

## Revendications

1. Equipement pour la préparation de produits réfrigérés, comprenant une cuve de confinement (2) adaptée pour contenir le produit à préparer ; un dispositif de mélange (3) disposé à l'intérieur de ladite cuve (2) et adapté pour entraîner la circulation continue du produit à l'intérieur de la cuve (2) elle-même, pour acheminer le produit vers une zone frontale de ladite cuve (2) ; un dispositif de refroidissement (4) disposé à l'intérieur de ladite cuve (2) pour refroidir ledit produit ; un dispositif distributeur (5) du produit, placé en correspondance de ladite zone frontale de la cuve de confinement (2), ladite cuve de confinement (2) étant calorifugée au moyen de parois thermiquement isolantes (21, 22) de manière à réduire l'échange thermique entre le milieu ambiant extérieur et l'intérieur de la cuve (2) elle-même, **caractérisé en ce que** lesdites parois thermiquement isolantes comprennent un corps de cuve (20) disposé entre une paire de parois latérales (22) rendues hermétiquement solidaires à ce même corps de cuve (20) pour réaliser un espace intermédiaire (23), ledit corps de cuve (20) étant fermé, sur le côté avant, par une paroi (27) qui s'étend en face d'une autre paroi (29), conformée d'une seule pièce avec cette même paroi avant (27) et écartée de manière appropriée pour définir par rapport à celle-ci un espace intermédiaire correspondant, ladite autre paroi (29) étant adaptée pour fermer frontalement de manière hermétique une première paroi (21) interne par rapport auxdites parois thermiquement isolantes (21, 22) de la cuve (2), ladite paroi avant (27) présentant inférieurement une portion profilée (28a) faisant saillie d'une mesure suffisante pour englober un manchon (28) dudit dispositif distributeur (5) qui est en communication avec l'intérieur de ladite cuve (2), ladite portion profilée (28a) étant adaptée pour définir un espace intermédiaire de calorifugeage dudit manchon (28).

2. Equipement selon la revendication 1, **caractérisé en ce que** lesdites parois thermiquement isolantes comprennent une première paroi (21) interne et une deuxième paroi (22) externe entre lesquelles est défini un espace intermédiaire (23) fermé de manière hermétique.

3. Equipement selon la revendication 2, **caractérisé en ce que** dans ledit espace intermédiaire (23) est contenu un gaz à basse conductivité thermique.

4. Equipement selon la revendication 1, **caractérisé en ce que** ledit corps de cuve (20) présente une portion inférieure (24) ayant la forme d'un secteur cylindrique s'étendant le long d'un axe sensiblement horizontal et une portion supérieure (25) qui s'étend à partir de la portion cylindrique précitée (24) et est pourvue d'une ouverture (12) supérieure adaptée pour être fermée par un couvercle (10), ladite portion inférieure (24) et ladite portion supérieure (25) constituant ladite première paroi (21) interne de la cuve (2).

5. Equipement selon la revendication 1, **caractérisé en ce que** ladite paroi avant (27) présente, en correspondance de la portion supérieure (25) dudit corps de cuve (20), une portion courbe (27a) inclinée vers l'intérieur de la cuve pour diriger vers cette extrémité le produit qui a interagi avec ledit dispositif de mélange (3), de manière à éviter des stagnations du produit dans les angles supérieurs de la cuve (2).

6. Equipement selon la revendication 1, **caractérisé en ce que** ledit corps de cuve (20) s'étend au-dessus d'un plateau de base (26), de forme sensiblement rectangulaire, conformé par le corps de cuve lui-même (20) et adapté pour être rendu hermétiquement solidaire, le long des limites longitudinales, avec lesdites parois latérales (22).

7. Equipement selon une des revendications précédentes, **caractérisé en ce que** ladite cuve de confinement (2) est réalisée en matière plastique transparente.
